# EUROPÄISCHE PATENTSCHRIFT

(11) **EP 2 860 085 B1**
(45) Veröffentlichungstag und Bekanntmachung des Hinweises auf die Patenterteilung: **19.07.2017**
(21) Anmeldenummer: 14186416.5
(22) Anmeldetag: 25.09.2014
(51) Int. Cl.: B60K 5/12, B62D 21/11

(54) **Hilfsrahmen für ein Kraftfahrzeug**
Subframe for a motor vehicle
Châssis auxiliaire pour un véhicule automobile

(30) Priorität: 10.10.2013 DE 102013016758
(43) Veröffentlichungstag der Anmeldung: 15.04.2015
(73) Patentinhaber: AUDI AG, 85045 Ingolstadt (DE)
(72) Erfinder: Isakiewitsch, Christian, 85051 Ingolstadt (DE); Scheiblecker, Sebastian, 85104 Pförring (DE)

(56) Entgegenhaltungen:
- EP-A2- 1 837 268
- DE-A1-102006 013 547
- DE-A1-102008 010 553

## Beschreibung

Die Erfindung betrifft einen Hilfsrahmen für ein Kraftfahrzeug gemäß der im Oberbegriff des Patentanspruches 1 angegebenen Art.

Derartige Hilfsrahmen für ein Kraftfahrzeug sind aus dem Stand der Technik hinreichend bekannt und werden in der Regel über zwei zueinander beabstandete Gussknoten gebildet, die mittels eines Querträgers und/oder eines Versteifungselementes miteinander verbunden sind. Des Weiteren weist der Hilfsrahmen Längsträger auf, die zum einen mit den Gussknoten und zum anderen mit der Karosserie verbunden sind. Die Gussknoten oder auch die Längsträger weisen entsprechende Anbindungspunkte für die Anordnung von Fahrwerkslenkern auf. Für die Aufnahme/Befestigung von Antriebsaggregaten werden so genannte Motorlager verwendet. Diese Lager dienen der Entkopplung der Schwingung die durch das Aggregat eingeleitet werden sowie zur Aufnahme von der im Fahrbetrieb entstehenden Kräfte und Momente. Die Motorlager sind an entsprechenden Lageranbindungspunkten des Hilfsrahmens befestigtbar. Ein derartiger Hilfsrahmen für ein Kraftfahrzeug ist beispielsweise in der DE 198 22 731 A1 beschrieben.

Je nach Aggregattyp und Dimension sind die Anforderungen an die Motorlager verschieden, weshalb die Motorlager in ihrer Größe und Position am Hilfsrahmen stets variieren.

Eine hohe Varianz an Hilfsrahmen oder Gussknoten für die Aufnahme von verschiedenen Aggregaten und Motorlagern ist jedoch aus wirtschaftlicher und technischer Sicht nicht tragbar.

Die EP 1 837 268 schlägt daher einen Hilfsrahmen vor, der um ein Adapterteil erweiterbar ist, dass zumindest eine weitere Zusatzlagerstelle bereitstellt. Das Adapterteil ist an der Versteifungsstruktur integral ausgebildet. Somit können die am Hilfsrahmen bereitgestellten Lagerstellen um mindestens zwei weitere Lagerstellen erweitert werden. Damit können auch Antriebsaggregate höherer Klassen am Hilfsrahmen aufgenommen werden. Bei kleineren Motorisierungen greift man auf ein versteiftes Elemente zurück, welches ohne die Adapterteile ausgebildet ist. Vorzugsweise ist hierbei das Adapterteil als Querträger ausgebildet.

Als nachteilig erweist sich hierbei, dass je nach Ausstattung und Motorisierung jeweils ein Strebenkreuz bzw. Versteifungselement bereitgestellt werden muss, was dazu führt, dass ein relativ großes Bauteil in mehreren Varianten gefertigt werden muss und dadurch die Effekte der großen Stückzahlen ungenutzt werden.

Ein weiterer wesentlicher Nachteil ist, dass durch die vorgeschlagene Lösung zwar eine gewisse Modularität entsteht, aber die Lagerposition letztendlich immer unverändert bleibt. Ein Vierzylinder-Reihenmotor kann im Vergleich zu einem Acht- oder Zwölfzylinder-V-Motor nicht über gleich positionierte Anbindungspunkte verfügen. Die EP 1 837 268 schlägt lediglich eine zusätzliche Lagerposition zu den baugleich, in den Gusskonsolen ausgebildeten Lagern vor. Diese Räume können jedoch aufgrund der Erstreckungsrichtung verschiedener Aggregate nicht mehr genutzt werden.

Ein gattungsgemäßer, sämtliche Merkmale des Oberbegriffs des Patentanspruches 1 aufweisender Hilfsrahmen für ein Kraftfahrzeug ist in der DE 10 2006 013 547 A1 offenbart.

Der Erfindung liegt die Aufgabe zugrunde, einen Hilfsrahmen für ein Kraftfahrzeug gemäß der im Oberbegriff des Anspruches 1 angegebenen Art unter Vermeidung der genannten Nachteile derart weiterzubilden, dass die Lagerposition der Motorlager am Gussknoten unter Beibehaltung der wesentlichen Bauteile des Hilfsrahmens variierbar ist.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

In bekannter Art und Weise umfasst der Hilfsrahmen für ein Kraftfahrzeug einen ersten und einen zweiten, jeweils in Fahrzeuglängsrichtung (x-Richtung) ausgerichteten Längsträger und mindestens eine zwischen den beiden Längsträgern angeordnete, in Fahrzeugquerrichtung (y-Richtung) ausgerichtete Querstruktur. Zwischen dem ersten Längsträger und der Querstruktur ist ein erster Gussknoten und zwischen dem zweiten Längsträger und der Querstruktur ein zweiter Gussknoten angeordnet. Die beiden Längsträger und die Querstruktur sind jeweils mit den entsprechend zugeordneten Gussknoten fest verbunden. Zudem weisen die beiden Gussknoten jeweils Lageranbindungspunkte zur Befestigung eines Motorlagers auf.

Erfindungsgemäß ist für beide Gussknoten jeweils ein mindestens einen Lageranbindungspunkt zur Befestigung eines Motorlagers aufweisendes Anbindungsteil vorgesehen. Hierbei sind an den Anbindungsteilen jeweils mehrere Lagerstellen ausgebildet, über die die Anbindungsteile jeweils an der Querstruktur sowie an den am Gussknoten vorhandenen Lageranbindungsstellen befestigbar sind.

Aufgrund der erfindungsgemäß vorgesehenen Anbindungsteile ist es nunmehr in vorteilhafter Weise möglich durch eine entsprechende Ausbildung der Anbindungsteile, insbesondere durch eine entsprechende Positionierung der der Lageranbindungspunkte an den Anbindungsteilen, die Lagerposition der Motorlager gezielt in Fahrzeuglängs-, Fahrzeugquer- und/oder Fahrzeughochrichtung (x-, y- und/oder z-Richtung) zu variieren.

D.h., es ist nunmehr ermöglicht, verschiedene Einbaupositionen bzw. eine Verlagerung des Motorlagers innerhalb des gleich ausgestalteten Hilfsrahmens zu ermöglichen. Weiterhin können nunmehr verschiedene Motorlager verbaut werden, die jeweils eine andere Geometrie aufweisen. Eine Anpassung der Gussknoten ist nicht mehr notwendig, sondern lediglich eine Geometrie bzw. Topologieanpassung der Anschlussteile.

Gemäß einer besonders vorteilhaften Ausführungsform der Erfindung sind am Hilfsrahmen als Querstruktur eine Querstrebe und ein Schubfeld vorgesehen und die beiden Anbindungsteile weisen querstrukturseitig jeweils zwei Lagerstellen auf. Während gussknotenseitig nach wie vor die beiden Anbindungsteile an die Gussknoten über die an den Gussknoten vorhandenen Lageranbindungspunkte befestigt sind, sind querstrukturseitig die beiden Anbindungsteile über ihre Lagerstellen jeweils an beiden Querstrukturen, d.h. an der Querstrebe und am Schubfeld, befestigt. Diese Ausbildung erweist sich als besonders vorteilhaft, da dies eine zusätzliche Versteifung des Hilfsrahmens in x-, y- und z-Richtung bewirkt, was die Akustik im Fahrzeug wesentlich verbessert.

Vorzugsweise sind hierbei die beiden querstrukturseitigen Lagerstellen derart angeordnet und die Anbindungsteile derart ausgebildet, dass in Kraftfahrzeugquerrichtung (y-Richtung) ein freier Korridor sich ausbildet. Diese Ausbildung der Querstreben hat den positiven Effekt, dass ausreichend Bauraum für die Anordnung z.B. eines Stabilisators zur Verfügung gestellt ist.

Gemäß einer besonders einfachen Ausgestaltung sind hierfür die querstrukturseitigen Lagerstellen in Fahrzeuglängsrichtung (x-Richtung) betrachtet beabstandet angeordnet und die Anbindungsteile sind im Bereich der querstrukturseitigen Lagerstellen brückenförmig, einen in Kraftfahrzeugquerrichtung (y-Richtung) betrachtet freien Korridor bildend ausgebildet.

Vorzugsweise sind die Anbindungsteile mittels Schraubverbindungen mit den Gussknoten und der Querstruktur verbunden. Hierdurch ist eine schnelle und kostengünstige Montage der Anbindungsteile gewährleistet.

Weiterhin sind vorzugsweise die Anbindungsteile als Gussteile ausgebildet. Die Ausbildung der Anbindungsteile als Gussteile hat den positiven Effekt, dass eine kostengünstige Herstellung der Anbindungsteile sichergestellt ist.

Weitere Vorteile, Merkmale und Anwendungsmöglichkeiten der vorliegenden Erfindung ergeben sich aus der nachfolgenden Beschreibung in Verbindung mit dem in den Zeichnungen dargestellten Ausführungsbeispiel.

Die Erfindung wird im Folgenden anhand des in den Zeichnungen dargestellten Ausführungsbeispiels näher beschrieben.

In der Beschreibung, in den Ansprüchen und in den Zeichnungen werden die in der unten aufgeführten Liste der Bezugszeichen verwendeten Begriffe und zugeordneten Bezugszeichen verwendet.

In den Zeichnungen bedeutet:
- Fig. 1: ein erfindungsgemäßer Hilfsrahmen in eine Ansicht schräg von vorne;
- Fig. 2: der Hilfsrahmen aus Fig. 1 in einer Draufsicht;
- Fig. 3: ein Ausschnitt des Hilfsrahmens aus Fig. 1 und 2 in vergrößerter Darstellung;
- Fig. 4: der Hilfsrahmen aus Fig. 1 und 2 mit zwei unterschiedlichen Antriebsaggregaten.

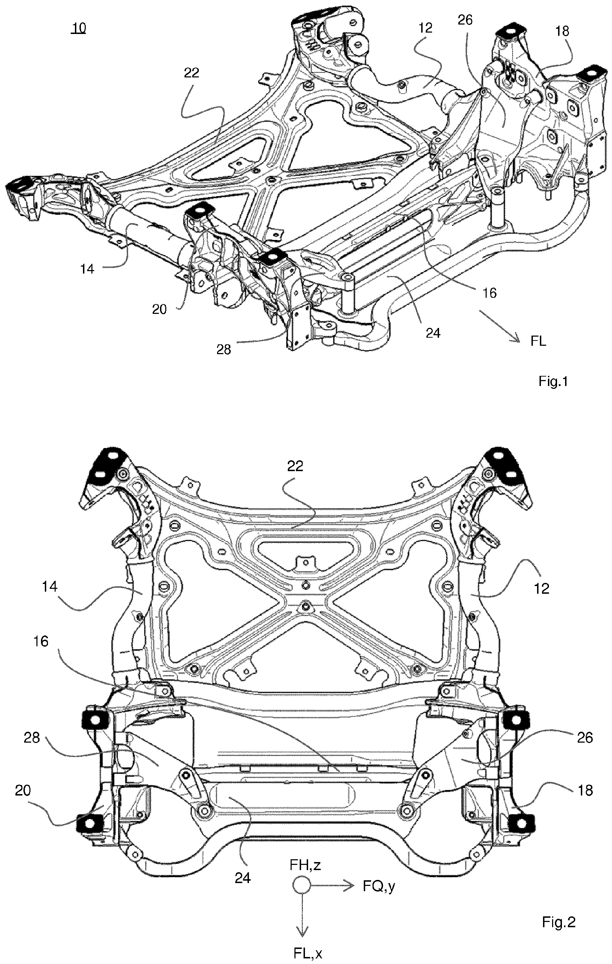

Fig. 1 und 2 zeigen einen insgesamt mit der Bezugsziffer 10 bezeichneten Hilfsrahmen für ein Kraftfahrzeug.

Der Hilfsrahmen 10 umfasst im Wesentlichen einen in Fahrzeuglängsrichtung FL ausgerichteten ersten Längsträger 12, einen in Fahrzeuglängsrichtung FL ausgerichteten zweiten Längsträger 14 sowie einen in Fahrzeugquerrichtung FQ sich erstreckenden Querträger 16.

Über einen ersten und zweiten Gussknoten 18, 20 sind die beiden Längsträger 12, 14 und der Querträger 16 miteinander fest verbunden. Neben dem Querträger 16 weist der Hilfsrahmen 10 als weitere Querstruktur eine Versteifungsstruktur 22 und ein Schubfeld 24 auf.

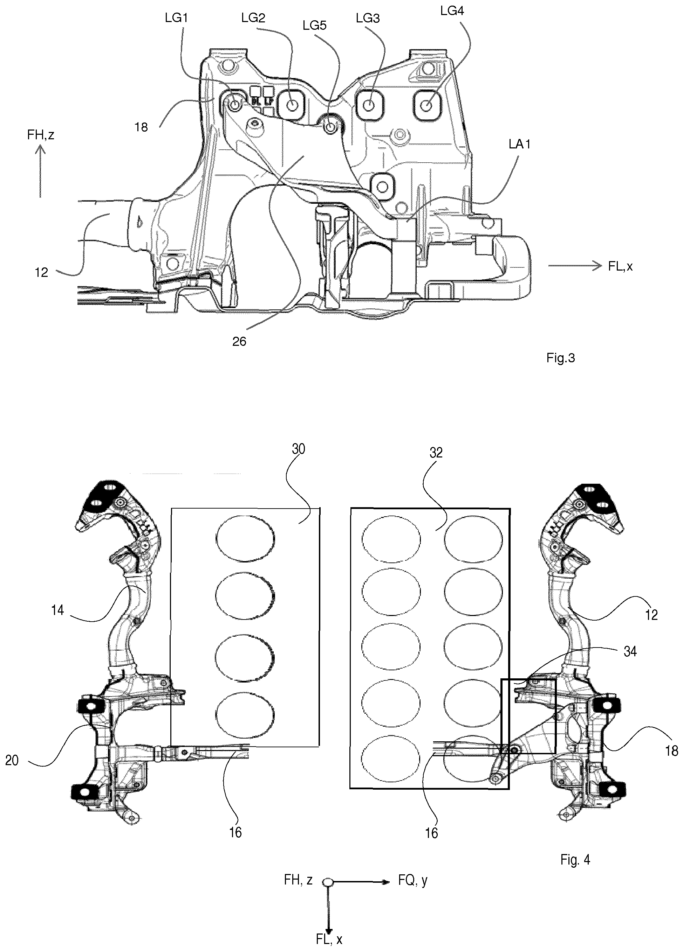

Zur Aufnahme eines, in Fig. 1 aus Gründen der Übersichtlichkeit nicht dargestellten Antriebsaggregats, sind an den Gussknoten 18, 20 mehrere Lageranbindungspunkte LG1, LG2, LG3, LG4 und LG5, siehe insbesondere Fig. 3, zur Befestigung eines Motorlagers angeordnet.

Weiterhin ist - wie Fig. 1 und 2 weiter zu entnehmen ist - den Gussknoten 18, 20 jeweils ein Anbindungsteil 26, 28 zugeordnet. Wie insbesondere Fig. 3 zeigt, weist dabei jedes Anbindungsteil 26, 28 seinerseits mindestens einen Lageranbindungspunkt LA1 zur Lagerung eines Motorlagers auf.

Gussknotenseitig sind die Anbindungsteile 26, 28 jeweils unter Ausnutzung mindestens eines an den entsprechenden Gussknoten 18, 20 vorhandenen Lageranbindungspunkte LG1, LG2, LG3, LG4 oder LG5 mittels einer Schraubverbindung mit dem zugeordneten Gussknoten 18, 20 verbunden. Querstrukturseitig ist jedes Anbindungsteil 26, 28 über zwei Verschraubungspunkte befestigt, nämlich einerseits am Querträger 16 und andererseits am Schubfeld 24. Durch die beschriebenen gussknotenseitige und querstrukturseitige Befestigung der beiden Anbindungsteile 26, 28 wird eine zusätzliche Versteifung des Hilfsrahmes 10 in alle Wirkrichtungen x, y und z erreicht, was die die Akustik im Fahrzeug wesentlich verbessert.

Der Effekt der erfindungsgemäßen Anbindungsteilen 26, 28 ist, dass je nach gewählter Einbauposition sowie Ausbildung der Anbindungsteile 26, 28, die Lage der Motorlager innerhalb des ansonsten gleich gestalteten Hilfsrahmes 10 auf eine einfache Art und Weise in x-, y, und/oder z-Richtung variierbar ist. Ein weiterer Effekt ist, dass ohne Vornahme einer größeren, kostenintensiven Änderung, an den Hilfsrahmen 10 verschiedene, z.B. eine andere Geometrie aufweisende, Motorlager verbaut werden können. Hierzu ist lediglich notwendig die schnell und kostengünstig herzustellenden Anschlussteile 26, 28 entsprechend zu gestalten - eine Anpassung der Gussknoten 18, 20 ist nicht mehr erforderlich.

Die Wirkung dieser Variierbarkeit ist in Fig. 4 dargestellt:
Während in der linken Darstellung die linke Hilfsrahmenseite mit einem kleinen Antriebsaggregat dargestellt ist, zeigt die rechte Darstellung die rechte Hilfsrahmenseite mit einem großen Antriebsaggregat.

Dabei sind - wie Fig. 4 zu entnehmen ist, die linke und rechte Seite des Hilfsrahmens 10 jeweils gleich ausgebildet.

In der linken Darstellung ist der Hilfsrahmen 10 mit einem kleinen, längsverbauten Antriebsaggregat 30, beispielsweise ein Reihenvierzylindermotor, R4, dargestellt. Das Antriebsaggregat ist dabei unter Verzicht eines Anschlussteiles über ein unmittelbar am Gussknoten 20 montiertes Motorlager abgestützt.

Demgegenüber ist auf der rechten Seite der baugleiche Hilfsrahmen 10 dargestellt, der allerdings ein großes, längseingebautes Antriebsaggregat 32, z.B. einen V12-Motor, aufnimmt. Zusätzlich zu dem Antriebsaggregat 32 ist ein Aggregatbauteil 34, beispielsweise ein Abgasturbolader, dargestellt. Da aufgrund der Erstreckungsrichtung des wesentlich größeren Antriebsaggregats 32 die Einbauposition des Motorlagers für den kleineren R4-Motor besetzt/verdeckt ist, ist am Gussknoten 18 das Anbauteil 26 angeordnet, mittels dessen die Einbauposition des benötigen V12-Motorlagers in x-, y- und z-Richtung verschoben werden kann.

### Bezugszeichenliste

- 10: Hilfsrahmen
- 12: Längsträger
- 14: Längsträger
- 16: Querträger
- 18: Gussknoten
- 20: Gussknoten
- 22: Versteifungsstruktur
- 24: Schubfeld
- 26: Anbindungsteil
- 28: Anbindungsteil
- 30: Antriebsaggregat
- 32: Antriebsaggregat
- 34: Aggregatbauteil

- LG1 - LG5: Lageranbindungspunkte am Gussknoten
- LA1: Lageranbindungspunkt am Anbindungsteil

- X, FL: Fahrzeuglängsrichtung
- Y, FQ: Fahrzeugquerrichtung
- Z, FH: Fahrzeughochrichtung

## Patentansprüche

1. Hilfsrahmen (10) für ein Kraftfahrzeug, umfassend
- einen ersten und einen zweiten in Fahrzeuglängsrichtung (FL) ausgerichteten Längsträger (12, 14),
- mindestens eine in Fahrzeugquerrichtung (FQ) ausgerichtete Querstruktur (16, 24), sowie
- einen ersten und zweiten Gussknoten (18, 20),
wobei der erste Gussknoten (18) zwischen dem ersten Längsträger (12) und der Querstruktur (16, 24) und der zweite Gussknoten (20) zwischen dem zweiten Längsträger (14) und der Querstruktur (16, 24) angeordnet ist und die beiden Längsträger (12, 14) und die Querstruktur (16, 24) über die entsprechenden Gussknoten (18, 20) fest miteinander verbunden sind, und die beiden Gussknoten (18, 20) jeweils Lageranbindungspunkte (LG1, LG2, LG3, LG4, LG5) zur Befestigung eines Motorlagers aufweisen, wobei für beide Gussknoten (18, 20) jeweils ein mindestens einen Lageranbindungspunkt (LA1) zur Befestigung eines Motorlagers aufweisendes Anbindungsteil (26, 28) vorgesehen ist, wobei an den Anbindungsteilen (26, 28) jeweils mehrere Lagerstellen ausbildet sind, über die die Anbindungsteile (26, 28) jeweils an der Querstruktur sowie an den an den Gussknoten (18, 20) vorhandenen Lageranbindungspunkte (LG1, LG2, LG3, LG4, LG5) befestigbar sind, **dadurch gekenn-zeichnet,** dass die an den Gussknoten (18,20) vorhandenen Lageranbindungspunkte (LG1, LG2, LG3, LG4, LG5) derart positioniert sind, so dass je nach gewählter Einbauposition sowie Ausbildung der Anbindungsteile (26, 28) die Lage der Motorlager innerhalb des ansonsten gleich gestalteten Hilfsrahmens (10) in x-, y- und/oder z-Richtung variierbar ist.

2. Hilfsrahmen nach Anspruch 1, **dadurch gekennzeichnet, dass** am Hilfsrahmen (10) als Querstruktur eine Querträger (16) und ein Schubfeld (24) vorgesehen sind, und die Anbindungsteile (26, 28) querstrukturseitig jeweils zwei Lagerstellen aufweisen, über die die Anbindungsteile (26, 28) mit dem Querträger (16) und dem Schubfeld (24) befestigt sind.

3. Hilfsrahmen nach Anspruch 2, **dadurch gekennzeichnet, dass** die beiden querstrukturseitigen Lagerstellen derart angeordnet und die Anbindungsteile (26, 28) derart ausgebildet, dass in Kraftfahrzeugquerrichtung (FQ) ein freier Korridor gebildet ist.

4. Hilfsrahmen nach Anspruch 3, **dadurch gekennzeichnet, dass** die querstrukturseitigen Lagerstellen in Fahrzeuglängsrichtung (FL) betrachtet beabstandet angeordnet sind und die Anbindungssteile (26, 28) im Bereich der querstrukturseitigen Lagerstellen brückenförmig, einen in Kraftfahrzeugquerrichtung (FQ) betrachtet freien Korridor bildend ausgebildet sind.

5. Hilfsrahmen nach einem der vorangegangenen Ansprüche, **dadurch gekennzeichnet, dass** die die Anbindungsteile (26, 28) mittels Schraubverbindungen mit den Gussknoten (18, 20) und der Querstruktur (16, 24) verbunden sind.

6. Hilfsrahmen nach einem der vorangegangenen Ansprüche, **dadurch gekennzeichnet, dass** die Anbindungsteile (26, 28) als Gussteile ausgebildet sind.

## Claims

1. Subframe (10) for a motor vehicle, comprising
- first and second longitudinal members (12, 14) oriented in the vehicle longitudinal direction (FL),
- at least one transverse structure (16, 24) oriented in the vehicle transverse direction (FQ), and
- first and second cast nodes (18, 20)
wherein the first cast node (18) is arranged between the first longitudinal member (12) and the transverse structure (16, 24) and the second cast node (20) is arranged between the second longitudinal member (14) and the transverse structure (16, 24)and the two longitudinal members (12, 14) and the transverse structure (16, 24) are permanently connected together by the corresponding cast nodes (18, 20), and the two cast nodes (18, 20) each have bearing connection points (LG1, LG2, LG3, LG4, LG5) for fixing a motor bearing, wherein for the two cast nodes (18, 20), at least one bearing connection point (LA1) in each case is provided for fixing a connecting part (26, 28) having a motor bearing, wherein a plurality of bearings is in each case formed at the connecting parts (26, 28), via which bearings the connecting parts (26, 28) can each be fixed to the transverse structure and to the bearing connection points (LG1, LG2, LG3, LG4, LG5) present at the cast nodes (18, 20), **characterised in that** the bearing connection points (LG1, LG2, LG3, LG4, LG5) present at the cast nodes (18, 20) are positioned in such a way that, depending on the chosen installation position and design of the connecting parts (26, 28), the position of the motor bearings within the otherwise identically designed subframe (10) can be varied in the x, y and/or z direction(s).

2. Subframe according to claim 1, **characterised in that** a transverse beam (16) and a shear panel (24) are provided as the transverse structure for a subframe (10), and the connecting parts (26, 28) each have two bearings at the transverse structure side, by way of which bearings the connecting parts (26, 28) are fixed to the transverse beam (16) and the shear panel (24).

3. Subframe according to claim 2, **characterised in that** the two transverse structure-side bearings are arranged in such a way and the connecting parts (26, 28) are designed in such a way that a free corridor is formed in the vehicle transverse direction (FQ).

4. Subframe according to claim 3, **characterised in that,** viewed in the vehicle longitudinal direction (FL), the transverse structure-side bearings are arranged spaced apart, and in the region of the transverse structure-side bearings the connecting parts (26, 28) are designed in the manner of a bridge so as to form, viewed in the vehicle transverse direction (FQ), a free corridor.

5. Subframe according to any of the preceding claims, **characterised in that** the connecting parts (26, 28) are connected by means of screw connections to the cast parts (18, 20) and the transverse structure (16, 24).

6. Subframe according to any of the preceding claims, **characterised in that** the connecting parts (26, 28) are designed as cast parts.

## Revendications

1. Faux-châssis (10) pour un véhicule automobile, comprenant
- une première et une deuxième poutre longitudinale (12, 14) orientée dans le sens de la longueur de véhicule (FL),
- au moins une structure transversale (16, 24) orientée dans le sens transversal de véhicule (FQ), ainsi
- qu'un premier et un deuxième élément de jonction coulé (18, 20),
dans lequel le premier élément dé jonction coulé (18) est disposé entre la première poutre longitudinale (12) et la structure transversale (16, 24) et le deuxième élément de jonction coulé (20) est disposé entre la deuxième poutre longitudinale (14) et la structure transversale (16, 24) et les deux poutres longitudinales (12, 14) et la structure transversale (16, 24) sont raccordées les unes aux autres de manière solidaire par l'intermédiaire des éléments de jonction coulés (18, 20) correspondants et les deux éléments de jonction coulés (18, 20) présentent respectivement des points de liaison de support (LG1, LG2, LG3, LG4, LG5) servant à la fixation d'un support de moteur, dans lequel respectivement une pièce de liaison (26, 28) présentant au moins un point de liaison de support (LA1) servant à la fixation d'un support de moteur est prévue pour les deux éléments de jonction coulés (18, 20), dans lequel respectivement plusieurs emplacements de support sont réalisés au niveau des pièces de liaison (26, 28), par l'intermédiaire desquels les pièces de liaison (26, 28) peuvent être fixées respectivement au niveau de la structure transversale ainsi qu'au niveau des points de liaison de support (LG1, LG2, LG3, LG4, LG5) présents au niveau des éléments de jonction coulés (18, 20), **caractérisé en ce que** les points de liaison de support (LG1, LG2, LG3, LG4, LG5) présents au niveau des éléments de jonction coulés (18, 20) sont positionnés de telle manière que respectivement selon une position de montage choisie ainsi que selon la réalisation des pièces de liaison (26, 28), la position des supports de moteur peut varier à l'intérieur du faux-châssis (10) à configuration autrement identique dans la direction x, y et/ou z.

2. Faux-châssis selon la revendication 1, **caractérisé en ce que** sont prévus au niveau du faux-châssis (10) en tant que structure transversale une poutre transversale (16) et un champ de poussée (24), et les pièces de liaison (26, 28) présentent, du côté de la structure transversale, respectivement deux emplacements de support, par l'intermédiaire desquels les pièces de liaison (26, 28) sont fixées à la poutre transversale (16) et au champ de poussée (24).

3. Faux-châssis selon la revendication 2, **caractérisé en ce que** les deux emplacements de support du côté de la structure transversale sont disposés de telle manière et les pièces de liaison (26, 28) sont réalisées de telle manière qu'un corridor dégagé est formé dans le sens transversal de véhicule automobile (FQ).

4. Faux-châssis selon la revendication 3, **caractérisé en ce que** les emplacements de support du côté de la structure transversale sont disposés, vus dans le sens de la longueur de véhicule (FL), de manière espacée, et les pièces de liaison (26, 28) sont réalisées en forme de pont dans la zone des emplacements de support du côté de la structure transversale, en formant un corridor dégagé vues dans le sens transversal de véhicule automobile (FQ).

5. Faux-châssis selon l'une des revendications précédentes, **caractérisé en ce que** les pièces de liaison (26, 28) sont raccordées au moyen de systèmes de liaison par vissage aux éléments de jonction coulés (18, 20) et à la structure transversale (16, 24).

6. Faux-châssis selon l'une des revendications précédentes, **caractérisé en ce que** les pièces de liaison (26, 28) sont réalisées sous la forme de pièces coulées.
